# EUROPEAN PATENT APPLICATION

(11) **EP 1 818 790 A2**
(43) Date of publication of application: **15.08.2007**
(21) Application number: 06027002.2
(22) Date of filing: 28.12.2006
(51) Int. Cl.: G06F 3/043

(54) **Touch panel, method for detecting touch input position, electro-optic device, and electronic device**

(30) Priority: 18.01.2006 JP 2006009469
(71) Applicant: SEIKO EPSON CORPORATION, Shinjuku-ku, Tokyo 163-0811 (JP)
(72) Inventor: Sakurai, Shinji, Suwa-shi Nagano-ken (JP); Taguchi, Satoshi, Suwa-shi Nagano-ken (JP); Funasaka, Tsukasa, Suwa-shi Nagano-ken (JP)
(74) Representative: HOFFMANN EITLE

(57) **Abstract**

A touch panel includes: a touch panel substrate (41) having an input surface (41a); a cover film (42) arranged separately from the input surface (41a), and facing to the input surface (41a); spacers (43) extending upright from the touch panel substrate (41) toward the cover film (42); a transmitter (51, 54) causing surface acoustic waves (Wvx, Wvy) to be propagated on the input surface (41a); a receiver (52, 53) measuring the surface acoustic waves (Wvx, Wvy) propagated on the input surface (41a); a memory (63) storing, as reference values, measurement values of the surface acoustic waves (Wvx, Wvy) when the cover film (42) is not being pressed; and a determination section (64) detecting, as touch input positions, positions at which a difference between the measurement values of the surface acoustic waves (Wvx, Wvy) when the touch panel (50) is being used and the reference values is significant.

## Description

### CROSS-REFERENCE TO RELATED APPLICATION

This application claims priority from Japanese Patent Application No. 2006-009469, filed January 18, 2006, the contents of which are incorporated herein by reference.

### BACKGROUND

### 1. Technical Field

The present invention relates to a touch panel, a method for detecting a touch input position thereof, an electro-optic device, and an electronic device.

### 2. Related Art

In recent years, in conjunction with the increasing use of small information electronic devices such as personal digital assistants (PDA) and palm top computers, liquid crystal devices having a touch panel mounted as an input device on the liquid crystal panel have become widely used.

Of these, in ultrasonic surface acoustic wave type touch panels, a touch input position is detected utilizing the propensity of surface acoustic waves that are over the surface of a glass substrate to become attenuated at a touch input position.

An example of this type of touch panel is the touch panel proposed in Japanese Unexamined Patent Application, First Publication No. 2004-348686 that is provided with a glass substrate over which a surface acoustic wave is transmitted, a transducer sending and receiving surface acoustic waves, a position detecting section detecting a touch position based on surface acoustic waves that are sent and received by the transducer, and a transparent resin film that is arranged so as to sandwich a space layer between itself and the glass substrate, and that has a plurality of dot spacers formed on a surface thereof that faces the glass substrate.

This transparent resin film is constructed such that, when no object is in contact with it, the surface facing the substrate is not in contact with the glass substrate, and when an object comes into contact with it, the surface facing the substrate makes contact with the glass substrate.

In addition, the touch input position is detected by detecting the attenuation of a surface acoustic wave at the position on which the transparent resin film is in contact with the glass substrate.

However, surface acoustic waves that are transmitted over the surface of a glass substrate are also attenuated by contact with a spacer.

In the touch panel in the above described patent document, there is concern that, even when there is no touch input, a spacer and the glass substrate will come into contact due to flexion of the transparent resin film or the like.

Moreover, if the vicinity of a spacer position is the touch input position, there is concern that the spacer will come into contact with the glass substrate prior to the transparent resin film.

In these cases, there is a problem in that the spacer position is erroneously detected as the touch input position.

### SUMMARY

An advantage of some aspects of the invention is to provide a touch panel and a method for detecting a touch input position thereof, in which it is possible to prevent erroneous detection of the touch input position, and is to provide an electro-optic device and an electronic device, that have excellent reliability.

A first aspect of the invention provides a touch panel, including: a touch panel substrate having an input surface; a cover film arranged separately from the input surface, and facing to the input surface; spacers extending upright from the touch panel substrate toward the cover film; a transmitter causing surface acoustic waves to be propagated on the input surface; a receiver measuring the surface acoustic waves propagated on the input surface; a memory storing, as reference values, measurement values of the surface acoustic waves when the cover film is not being pressed; and a determination section detecting, as touch input positions, positions at which a difference between the measurement values of the surface acoustic waves when the touch panel is being used and the reference values is significant.

According to this structure, because spacers are arranged on the touch panel substrate, it is possible to measure reference values of a surface acoustic wave including any attenuation that is caused by the spacers.

As a result, the difference between measurement values of surface acoustic waves when a touch panel is being used and the reference values is not significant at spacer positions.

Accordingly, it is possible to prevent erroneous detections in which a spacer position is determined as a touch input position.

Moreover, because the cover film has flexibility, even if the vicinity of a spacer position does become a touch input position, the spacer does not get firmly pressed.

Because of this, it is sufficient to measure reference values of the surface acoustic waves while the cover film is not being pressed, so that it is possible to simplify the operation of preparing the touch panel for use (i.e., calibration).

A second aspect of the invention provides a method for detecting a touch input position on a touch panel, including: recording, as reference values, measurement values of surface acoustic waves when a cover film arranged separately from an input surface of a touch panel substrate and facing the input surface is not being pressed; and detecting, as touch input positions, positions at which a difference between the measurement values of the surface acoustic waves when the touch panel is being used and the reference values is significant.

According to this method, it is possible to prevent erroneous detections in which a spacer position is determined as a touch input position.

A third aspect of the invention provides an electro-optic device including: an image display device on which a plurality of pixels are arrayed in rows; and a touch panel arranged on an image display side of the image display device. The touch panel includes: a touch panel substrate having an input surface; a cover film arranged separately from the input surface, and facing to the input surface; spacers extending upright from the touch panel substrate toward the cover film; a transmitter causing surface acoustic waves to be propagated on the input surface; a receiver measuring the surface acoustic waves propagated on the input surface; a memory storing, as reference values, measurement values of the surface acoustic waves when the cover film is not being pressed; and a determination section detecting, as touch input positions, positions at which a difference between the measurement values of the surface acoustic waves when the touch panel is being used and the reference values is significant.

According to this structure, because the electro-optic device includes the touch panel that makes it possible to prevent erroneous detections of a touch input position, it is possible to provide an electro-optic device having excellent reliability.

It is preferable that, in the electro-optic device of the third aspect of the invention, the image display device function as the touch panel substrate.

According to this structure, it is possible to reduce a thickness of the electro-optic device.

Moreover, because it is possible to accurately position the spacers of the touch panel on the image display device, it is possible to precisely position the spacers of the touch panel in boundary regions between a plurality of pixels of the image display device.

It is preferable that, in the electro-optic device of the third aspect of the invention, the image display device be a liquid crystal device including a pair of substrates sandwiching a liquid crystal and a pair of polarization plates arranged on an outer side of the pair of substrates, and the polarization plate, of the pair of polarization plates, located on the image display side function as the cover film.

According to this structure, it is possible to reduce a thickness of the electro-optic device.

It is preferable that, in the electro-optic device of the third aspect of the invention, the spacers be arranged at boundary regions of the plurality of pixels on the image display device in view from a perpendicular direction relative to the touch panel substrate.

According to this structure, it is possible to suppress any reduction in the numerical aperture of an image display device that is caused by the spacers of a touch panel.

A fourth aspect of the invention provides an electronic device including the above described electro-optic device.

According to this structure, because the electronic device includes the touch panel that makes it possible to prevent erroneous detections of a touch input position, it is possible to provide an electronic device having excellent reliability.

### BRIEF DESCRIPTION OF THE DRAWINGS

FIG. 1 is a cross-sectional view of an electro-optic device according to a first embodiment.

FIG. 2 is an exploded perspective view of a liquid crystal device.

FIG. 3 is a plan view of a touch panel substrate.

FIGS. 4A and 4B are explanatory views of an attenuation action of a surface acoustic wave at a touch input position.

FIG. 5 is a block diagram of a control unit.

FIGS. 6A and 6B are explanatory views of an attenuation action of a surface acoustic wave at a spacer position.

FIGS. 7A to 7C are explanatory views of an attenuation action of a surface acoustic wave when the vicinity of a spacer position is pressed.

FIGS. 8A to 8C are explanatory views of an attenuation action of a surface acoustic wave when a spacer position is pressed.

FIG. 9 is an explanatory view of an electro-optic device according to a second embodiment.

FIG. 10 is an explanatory view of an electro-optic device according to a third embodiment.

FIG. 11 is a perspective view of a mobile telephone.

### DESCRIPTION OF EXEMPLARY EMBODIMENTS

Embodiments of this invention will now be described with reference to the drawings.

In each of the drawings used in the description below, the scale of the respective components has been suitably altered in order to make each component a recognizable size.

Note also that in this specification, a liquid crystal layer side of the respective constituent components of a liquid crystal device is called an inner side, while an opposite side therefrom is called an outer side.

In addition, in this specification, a touch input side of the respective constituent components of a touch panel is called a surface side, while an opposite side therefrom is called a rear side.

First embodiment

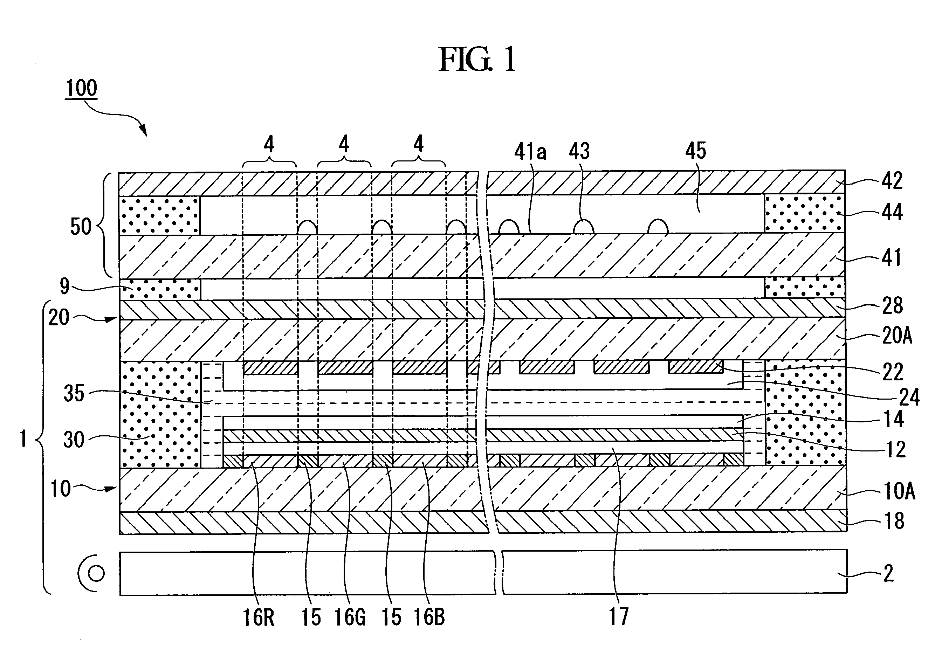

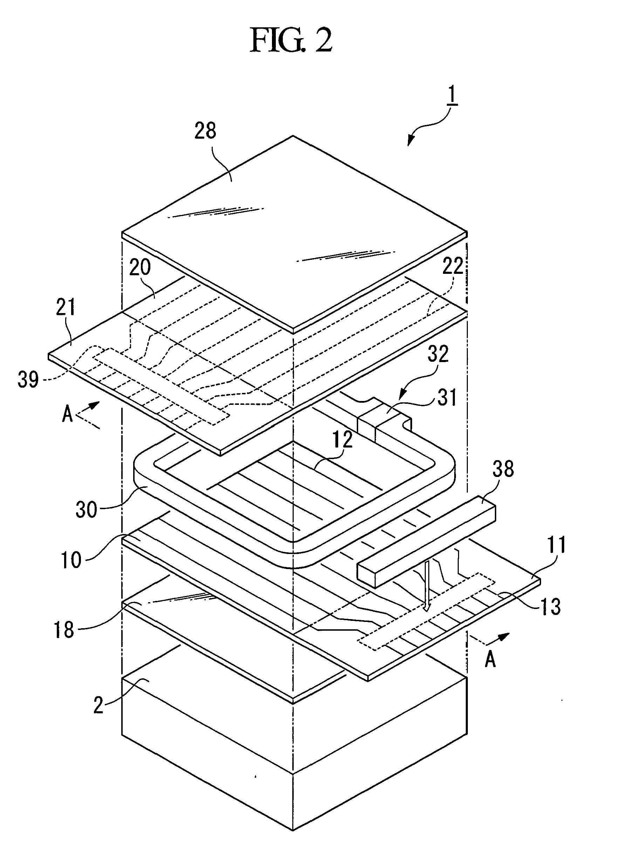

FIG. 1 is an explanatory view of an electro-optic device according to a first embodiment, and is a cross-sectional view taken along the line A-A in FIG. 2.

As shown in FIG. 1, in an electro-optic device 100 according to the first embodiment, a touch panel 50 is arranged on an image display side (i.e., a front side) of an image display device in the form of a liquid crystal device 1.

Liquid crystal device

FIG. 2 is an exploded perspective view of a liquid crystal device.

In this embodiment, a passive matrix type of liquid crystal device is used as an example, however, it is also possible for this invention to be applied to an active matrix type of liquid crystal device.

In the liquid crystal device 1, a pair of substrates formed by a bottom substrate 10 and a top substrate 20 that are made of a transparent material such as glass are positioned facing each other.

Spacers (not shown) are arranged between the two substrates 10 and 20, and the space between the two substrates 10 and 20 is held, for at example, at approximately 5 µm.

Peripheral edge portions of the two substrates 10 and 20 are bonded by a sealing member 30 that is formed by a thermosetting or ultraviolet curable or the like adhesive agent.

A liquid crystal injection aperture 32 protruding to the outer side from the two substrates 10 and 20 is formed at a portion of the sealing member 30.

A space enclosed by the two substrates 10 and 20 and the sealing member 30 is enclosed by a liquid crystal material such as super twisted nematic (STN) liquid crystal.

After this liquid crystal has been injected, the liquid crystal injection aperture 32 is sealed by a sealing member 31.

A common electrode 12 is formed from a transparent conductive material such as ITO in a stripe configuration on an inner surface of the bottom substrate 10.

Moreover, a segment electrode 22 is formed from a transparent conductive material such as ITO in a stripe configuration on an inner surface of the top substrate 20.

The segment electrode 22 and the common electrode 12 are arranged orthogonally to each other, and the vicinity of their intersection points form pixels of the liquid crystal device.

An incidence side polarization plate 18 is on the outer side of the bottom substrate 10, and an outgoing side polarization plate 28 is arranged on the outer side of the top substrate 20.

The incidence side polarization plate 18 and the outgoing side polarization plate 28 are arranged such that their respective transmission axes intersect each other at a predetermined angle (for example, approximately 90°).

A backlight 2 is arranged at the outer side of the incidence side polarization plate 18.

The bottom substrate 10 has a protruding portion 11 that is formed so as to protrude on a side of the top substrate 20.

The common electrode 12 is formed so as to extend onto the protruding portion 11.

A wiring pattern 13 that connects the liquid crystal device 1 to another substrate is formed at a distal end of the protruding portion 11.

A drive IC 38 that drives the common electrode 12 based on signals from another substrate is packaged between the wiring pattern 13 and the common electrode 12.

In the same way, the top substrate 20 has a protruding portion 21.

The segment electrode 22 is formed so as to extend onto the protruding portion 21, and a drive IC 39 that drives the segment electrode 22 is packaged on the protruding portion 21.

Returning to FIG. 1, red (R), green (G), and blue (B) coloring material layers 16R, 16G, and 16B that constitute color filters are formed so as to correspond to a plurality of pixels 4 on the inner screen of the bottom substrate 10.

A shading film 15 is formed between each of the coloring material layers 16R, 16G, and 16B.

The shading films 15 prevent leakage light from adjacent pixels 4.

A flattening film (i.e., a protective film) 17 is formed on a surface of the respective coloring material layers 16R, 16G, and 16B and on the shading film 15.

The common electrode 12 is formed on the surface of the flattening film 17.

An oriented film 14 that regulates the oriented state of the liquid crystal when no electric field is being applied is formed on the surface of the common electrode 12.

The segment electrode 22 is formed on the inner surface of the top substrate 20.

An oriented film 24 that regulates the oriented state of the liquid crystal when no electric field is being applied is formed on the surface of the segment electrode 22.

The orientation direction of the liquid crystals regulated by the oriented film 24 of the top substrate 20 and the orientation direction of the liquid crystals regulated by the oriented film 14 of the bottom substrate 10 are formed on the respective oriented films 14 and 24 so as to intersect each other at a predetermined angle (for example, approximately 90°).

In this structure, when light from the backlight 2 enters into the incidence side polarization plate 18, only the linearly polarized light that runs along the transmission axis of the incidence side polarization plate 18 is transmitted through the incidence side polarization plate 18.

In the process of being transmitted through the liquid crystal layer 35 that is sandwiched between the two substrates 10 and 20, the linearly polarized light that is transmitted through the incidence side polarization plate 18 undergoes rotatory polarization in accordance with the oriented state of the liquid crystals when no electric field is applied.

Of the linearly polarized light that is transmitted through the liquid crystal layer 35, only those components that match the transmission axis of the outgoing side polarization plate 28 are transmitted through the outgoing side polarization plate 28.

Moreover, when a data signal is supplied to one of the common electrode 12 and the segment electrode 22 and a scan signal is supplied to the other one thereof, voltage is applied to the liquid crystal layer 35 that is located on the pixel 4 at the point of intersection of the two electrodes 12 and 22.

The oriented state of the liquid crystal molecules changes in accordance with the level of this voltage, and the angle of the rotatory polarization of the linearly polarized light that enters the liquid crystal layer 35 is adjusted.

As a result, image display is performed with the light transmittance being controlled for each pixel 4 of the liquid crystal device 1.

Cross-sectional structure of touch panel

Next, the touch panel 50 will be described.

The touch panel 50 includes a touch panel substrate 41 and a cover 42.

The touch panel substrate 41 is formed from a transparent material such as glass.

The cover film 42 is arranged apart from and facing a touch input surface 41a (input surface) of the touch panel 41.

The cover film 42 is formed in the shape of a flexible film from polyethylene terephthalate (PET), polycarbonate (PC), acrylic, or cellulose triacetate (TAC).

Anti-reflection processing such as an AR coating may be performed on surfaces of the cover film 42.

A sealing member 44 is arranged at peripheral edge portions between the touch panel substrate 41 and the cover film 42.

As a result, a gas layer 45 including air or an inactive gas or the like is formed between the touch panel substrate 41 and the cover film 42.

The thickness of the gas layer 45 is formed at substantially several µm, however, if this thickness is formed at greater than or equal to 10 µm, it is possible to prevent the occurrence of Newton rings.

As described below, surface acoustic waves are propagated on the touch input surface 41 a of the touch panel substrate 41.

By depressing the touch input surface 41 a of the touch panel substrate 41 via the cover film 42, the surface acoustic waves are attenuated and it is possible to detect the touch input position.

In this manner, by positioning the cover film 42 such that the cover film 42 faces the touch panel substrate 41, it is possible to prevent foreign matter from adhering to the surface of the touch input surface 41a. Accordingly, erroneous detection of a touch input position can be prevented.

Moreover, because a cover film has a lower modulus of elasticity than a glass substrate, an acoustic surface wave can be reliably absorbed and attenuated as a result of making contact with the touch panel substrate 41.

Furthermore, even if the touch panel substrate 41 is broken, any broken shards are prevented from scattering by the cover film 42.

Spacers 43 are arranged between the touch panel substrate 41 and the cover film 42.

The spacers 43 are formed in a column shape from a resin material or the like, and stand upright from a touch input surface 41a of the touch panel substrate 41.

As a method for forming the spacers 43, a method in which after forming a film made from a photosensitive resin material on the touch input surface 41a of the touch panel substrate 41, the film is patterned using photolithographic technology, may be used.

In order to form the spacers 43 it is also possible to employ a method in which a resin material liquid body is ejected onto predetermined positions using a droplet ejection method and is then cured.

The spacers 43 are formed at a height of substantially several µm.

By forming the height of the spacers 43 to be less than the thickness of the gas layer 45, a space may be formed between distal ends of the spacers 43 and the cover film 42.

Moreover, the distal end of the spacers 43 may be made to abut against the rear surface of the cover film 42 by forming the height of the spacers 43 to be equal to the thickness of the gas layer 45.

By forming the spacers 43 in this manner, it is possible to prevent any undesired contact between the touch panel substrate 41 and the cover film 42. As a result, it is possible to prevent any misdetection of whether or not a touch input has been made and of a touch input position.

Moreover, by forming the spacers 43, the distance between the touch panel substrate 41 and the cover film 42 can be held substantially constant. As a result, it is possible to prevent the occurrence of Newton rings.

A plurality of the spacers 43 are arranged at intervals of substantially several mm on the touch panel substrate 41.

When seen in plan view (i.e., when viewed from the normal direction of the touch panel substrate), it is desirable for the spaces 43 to be arranged in boundary regions of the plurality of pixels 4 on the liquid crystal device 1.

Namely, the spacers 43 are arranged in areas of the liquid crystal device 1 on which the shading film 15 is formed (i.e., non-aperture areas).

As a result, it is possible to suppress any reduction in the numerical aperture of the liquid crystal device 1 that is caused by the spacers 43.

Touch panel planar structure

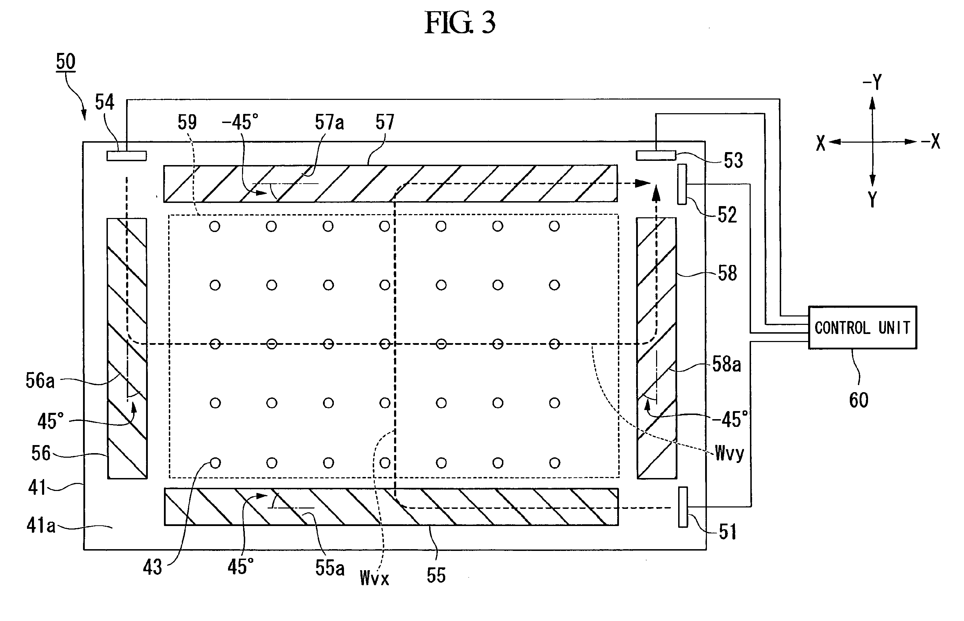

FIG. 3 is a plan view of a touch panel substrate.

The touch panel 50 has an input corresponding surface 59 in a center portion of the touch input screen 41a of the touch panel substrate 40.

The plurality of spacers 43 is arranged on the input corresponding surface 59.

An X transmitter 51 and a Y transmitter 54 are arranged in corners of the touch input surface 41a.

The X transmitter 51 generates surface acoustic waves Wvx in the X axial direction shown by the broken arrows.

The Y transmitter 54 generates surface acoustic waves Wvy in the Y axial direction shown by the broken arrows.

These transmitters 51 and 54 generate surface acoustic waves Wvx and Wvy by converting bulk waves generated by piezoelectric vibrators (not shown) into surface waves running in specific directions, namely, the X axial direction and Y axial direction.

In addition, an X receiver 52 and a Y receiver 53 are arranged in another corner of the touch input surface 41a.

The X receiver 52 detects the surface acoustic waves Wvx generated by the X transmitter 51.

The Y receiver 53 detects the surface acoustic waves Wvy generated by the Y transmitter 54.

The X transmitter 51, the Y transmitter 54, the X receiver 52, and the Y receiver 53 are electrically connected to a control unit 60.

The control unit 60 sends drive signals to the X transmitter 51 and the Y transmitter 54. As a result, the control unit 60 generates surface acoustic waves Wvx and Wvy in the X transmitter 51 and the Y transmitter 54.

In addition, reception signals of the surface acoustic waves Wvx and Wvy received by the X receiver 52 and the Y receiver 53 are input into the control unit 60.

The surface acoustic waves Wvx generated by the X transmitter 51 are propagated in the X axial direction and enter into a reflective array 55.

The reflective array 55 is an array of reflective elements 55a.

The reflective elements have the function of reflecting the surface acoustic waves so that the direction in which the surface acoustic waves are propagated is changed.

The respective reflective elements 55a in the reflective array 55 are arranged at an angle of approximately 45° relative to the X axis and change the direction of the surface acoustic waves Wvx into the -Y axial direction.

The surface acoustic waves Wvx that are directed in the -Y axial direction pass unmodified through the input corresponding surface 59 and enter a reflective array 57.

The respective reflective elements 57a in the reflective array 57 are arranged at an angle of approximately -45° relative to the X axis and have the function of changing the direction of the surface acoustic waves Wvx into the -X axial direction.

The surface acoustic waves Wvx that are directed in the -X axial direction by the reflective elements 57a are detected by the X receiver 52.

In contrast, the surface acoustic waves Wvy that are generated by the Y transmitter 54 are transmitted in the Y axial direction and enter a reflective array 56.

The respective reflective elements 56a in the reflective array 56 are arranged at an angle of approximately 45° relative to the Y axis and change the direction of the surface acoustic waves Wvy into the -X axial direction.

The surface acoustic waves Wvy that are directed in the -X axial direction pass unmodified through the input corresponding surface 59 and enter a reflective array 58.

The respective reflective elements 58a in the reflective array 58 are arranged at an angle of approximately -45° relative to the Y axis and change the direction of the surface acoustic waves Wvy into the -Y axial direction.

The surface acoustic waves Wvy that are directed in the -Y axial direction are detected by the Y receiver 53.

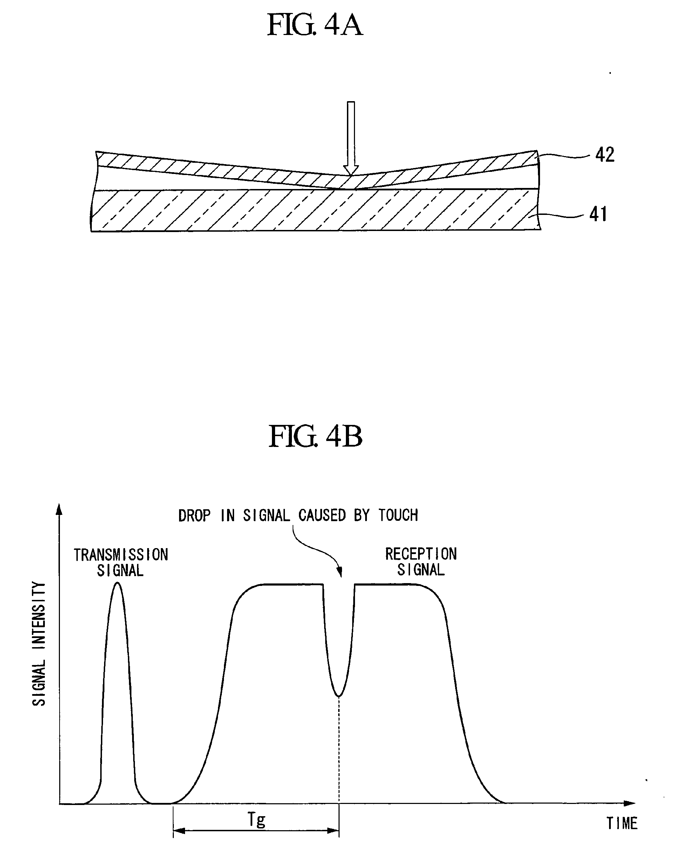

FIG. 4B is a graph showing an example of an envelope waveform of a detected surface acoustic wave.

In FIG. 4B, the horizontal axis indicates time, while the vertical axis shows the signal intensity of a surface acoustic wave.

Here, a case will be considered in which the surface acoustic waves Wvx are sent by the X transmitter 51 shown in FIG. 3 over the surface of the touch panel substrate 41.

The surface acoustic waves Wvx generated by the X transmitter 51 pass through the reflective arrays 55 and 57 and are detected by the X receiver 52.

At this time, the respective reflective elements of the reflective arrays 55 and 57 make a set of a plurality of paths that each has a different length.

The surface acoustic waves Wvx that are reflected by each of the consecutive reflective elements in the reflective arrays 55 and 57 pass through consecutively longer paths and arrive at the X receiver 52.

As a result, as shown in FIG. 4B, compared with the waveform of a transmitted signal, the waveform of a reception signal detected by the X receiver has a trapezoidal waveform that maintains a flat shape for a period of time.

FIG. 4A is a cross-sectional view shown a touch input state of a touch panel.

When a user touches the cover film 42 using a pen or finger, the cover film 42 is bent at the touch input position and makes contact with the touch input surface of the touch panel substrate 41.

When the surface acoustic waves propagated over the touch panel substrate 41 pass the position on which the cover film 42 is in contact, they are absorbed by the cover film 42 and are attenuated.

As a result, a drop is generated in the signal that is caused by the touch in the envelope waveform of the surface acoustic wave Wvx shown in FIG. 4B.

After the reception signal has been detected, by measuring a time Tg until the drop in the signal is generated by the touch, it is possible to specify the X coordinate of the touch input position.

The same applies when specifying the Y coordinate of the touch input position.

In this manner, the control unit 60 shown in FIG. 3 calculates the X coordinate and the Y coordinate of a touch input position based on a surface acoustic wave Wvx detected by the X receiver 52 and a surface acoustic wave Wvy detected by the Y receiver 53.

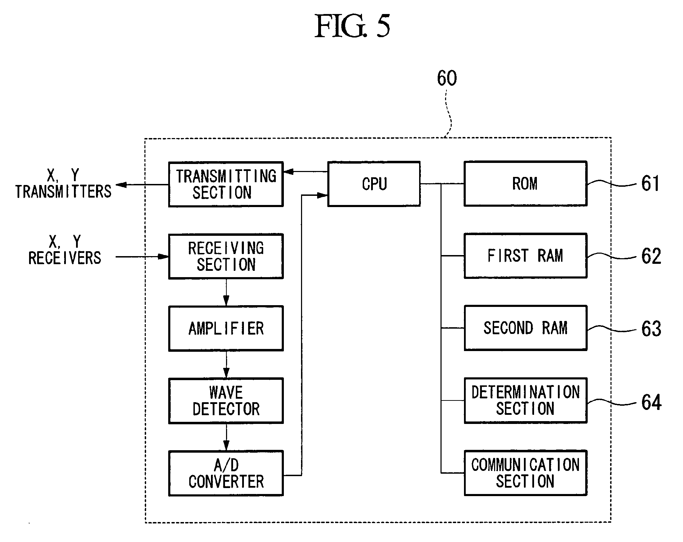

FIG. 5 is a block diagram of the control unit.

The control unit 60 includes a transmitting section outputting drive signals to the X and Y transmitters, and a receiving section into which reception signals from the X and Y receivers are input.

These reception signals are amplified by an amplifier, detected by a detector, and quantized by an A/D converter.

After reception signals of surface acoustic waves while the touch panel is being used have been quantized, they are stored in a first RAM 62 as measurement values.

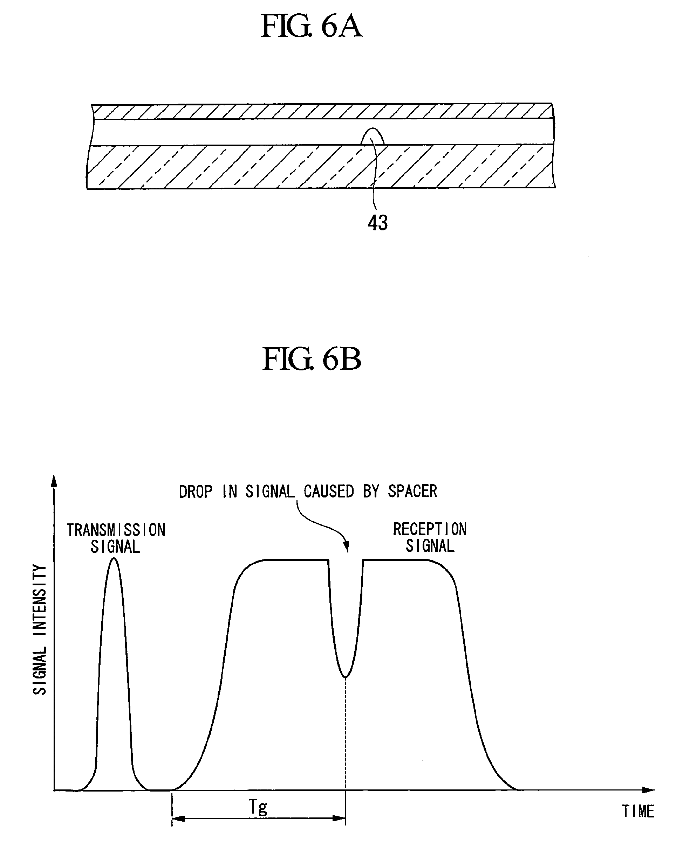

Surface acoustic waves propagated over the touch panel substrate are attenuated not only when they pass a position on which the cover film is being touched, as described above, but are also attenuated when they pass the position of a spacer 43 shown in FIG. 6A.

Because of this, a drop in the reception signal shown in FIG. 6B is also generated at the positions of the spacers 43.

Therefore, in order to ascertain drops in reception signals that are caused by spacer positions, as a preparatory operation to using the touch panel (i.e., calibration), reception signals of the surface acoustic waves are measured while the cover film is not in a pressed state.

After these reception signals have been quantized, they are stored in a second RAM 63 (memory) shown in FIG. 5 as reference values.

The control unit 60 shown in FIG. 5 also includes ROM 61, a determination section 64, and a communication section.

Threshold values that determined whether or not a touch input exists are stored in the ROM 61.

The determination section 64 obtains a difference between a measurement value stored in the first RAM 62 and a reference value stored in the second RAM 63.

This difference is a value obtained by detecting a portion that exceeds a threshold value stored in the ROM 61 as a touch input position.

The communication section outputs XY coordinates of a detected touch input position.

Method for detecting a touch input position on touch panel

Next, a method for detecting a touch input position on a touch panel will be described.

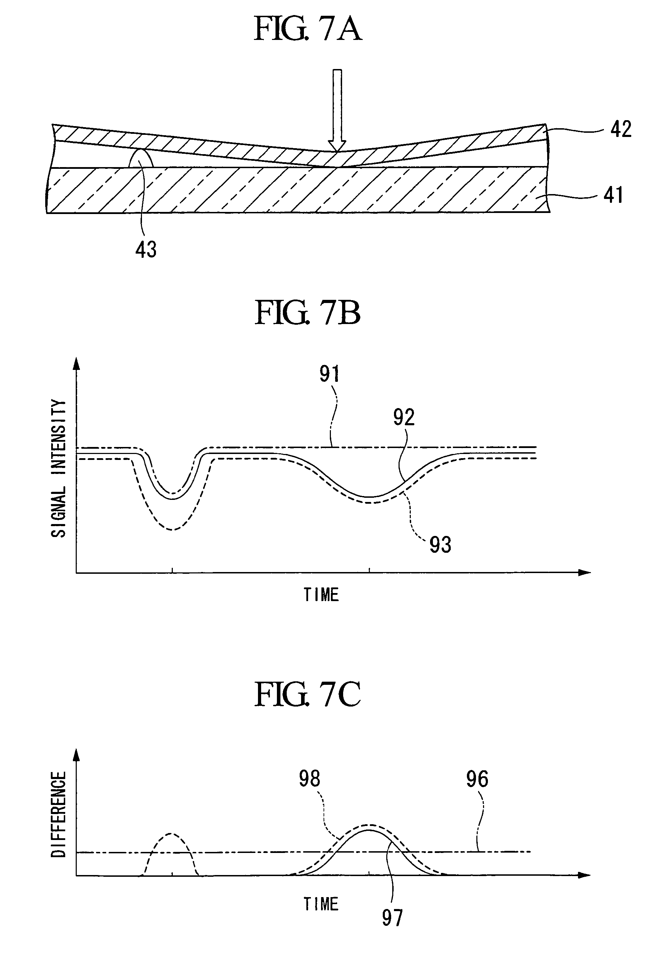

FIGS. 7A to 7C show a case in which the vicinity of a spacer position becomes a touch input position.

FIG. 7A is a cross-sectional view, FIG. 7B is a graph of signal intensity of reference values and measurement values, and FIG. 7C is a graph showing a difference between the reference values and measurement values.

To start with, as a preparatory operation to using the touch panel (i.e., calibration), reception signals of the surface acoustic waves are measured while the cover film is not in a pressed state.

Firstly, surface acoustic waves are sent over the touch panel substrate and those surface acoustic waves that have been attenuated at a spacer position are received and input into the control unit.

As a result, as shown in FIG. 7B, a reference value 91 is created in which the signal intensity has dropped at a spacer position.

This reference value 91 is stored in the second RAM 63 shown in FIG. 5.

Next, detection of a touch input position while the touch panel is in use is performed.

Firstly, surface acoustic waves are sent over the touch panel substrate 41 shown in FIG. 7A.

These surface acoustic waves are also attenuated at a position on which the cover film 42 touches the touch panel substrate 41 (i.e., at a touch input position) in addition to the positions of the spacers 43.

These surface acoustic waves are received and input into the control unit.

As a result, as shown in FIG. 7B, a measurement value 92 is generated in which the signal intensity drops at the spacer positions and at the touch input position.

This measurement value 92 is stored in the first RAM 62 shown in FIG. 5.

Next, the determination section 64 in the control unit 60 reads the reference values from the second RAM 63 and reads the measurement values from the first RAM 62, and then calculates a difference 97 between the two shown in FIG. 7C.

At the touch input position, because there is no reduction in the reception intensity of the reference values 91 and only the reception intensity of the measurement values 92 is reduced, the difference 97 is significant.

In contrast to this, at the spacer positions, because the reception intensities of both the reference values 91 and the measurement values 92 are reduced equally, the difference 97 is substantially zero.

Next, the determination section compares the difference 97 shown in FIG. 7C with the threshold value 96 registered in advance.

If the difference 97 exceeds the threshold value 96, then that position is detected as the touch input position.

If a reference value or a value that is greater than the noise level superimposed onto the measurement values is set as the threshold value 96, then it is possible to decrease the occurrence of any misdetection of a touch input position.

In this manner, in this embodiment, because spacers are arranged on a touch panel substrate, it is possible to measure reference values of surface acoustic waves that include the amount of attenuation that is caused by the spacers.

As a result, the difference between the measurement values of surface acoustic waves and the reference values when a touch panel is in use is not significant at the spacer positions.

Because of this, it is possible to prevent erroneous detections in which a spacer position is determined as being a touch input position.

In a conventional touch panel, a glass substrate having a high modulus of elasticity is arranged so as to face the touch panel substrate.

If a glass substrate such as this is pressed, then, as shown in FIG. 7A, the spacers 43 that are located in the vicinity of the touch input position become strongly pressed at the same time.

As a result, in a conventional measurement value 93 shown in FIG. 7B, the amount of the reduction in the signal intensity at the spacer position is greater compared with the reference value 91.

Because of this, a conventional difference 98 shown in FIG. 7C is also significant at the spacer position in addition to the depressed position.

Accordingly, there is the problem in that erroneous detection of the touch input position is commonly happened.

If the reference value 91 shown in FIG. 7B is measured when the glass substrate is in a depressed state, the amount of the reduction in the signal intensity at the spacer position is equal to the conventional measurement value 93.

However, in the same way as when the touch panel is being used, it is not possible to depress the glass substrate and, moreover, the operation of preparing the touch panel for use (i.e., calibration) becomes complex.

In contrast to this, in the touch panel of this embodiment, a cover film having a low modulus of elasticity is arranged facing to the touch panel substrate.

Because the cover film is flexible, even if the vicinity of a spacer position forms a touch input position, the spacer is not strongly pressed.

Because of this, it is sufficient if reference values of the surface acoustic waves are measured while the cover film is not being pressed, so that the operation of preparing the touch panel for use (i.e., calibration) is simplified.

FIGS. 8A to 8C show a case in which a spacer position forms a touch input position.

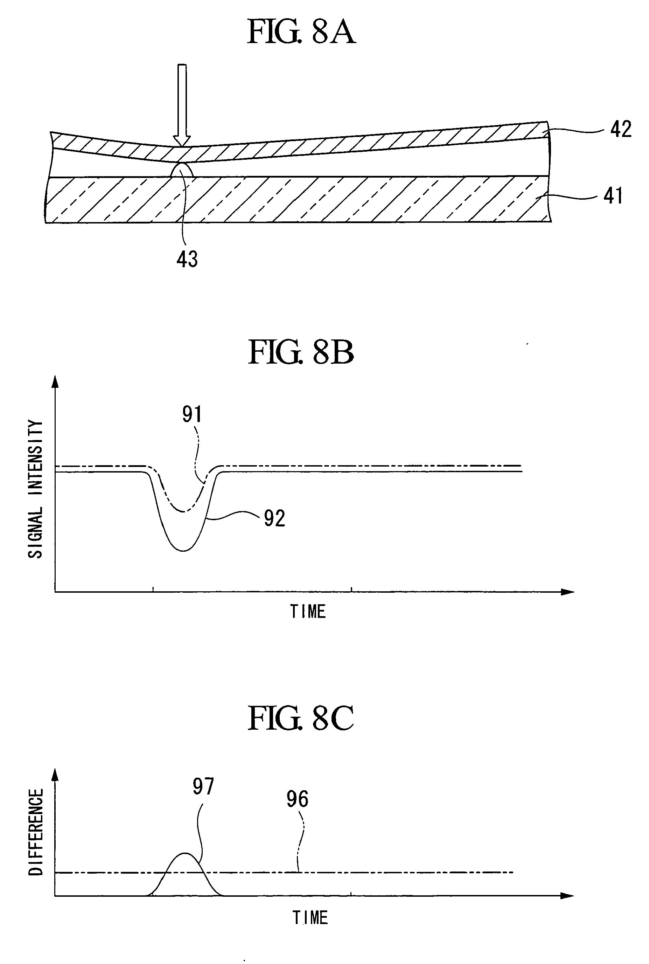

FIG. 8A is a cross-sectional view, FIG. 8B is a graph of signal intensity of reference values and measurement values, and FIG. 8C is a graph showing a difference between the reference values and measurement values.

As shown in FIG. 8A, a case will be examined in which the cover film 42 is pressed at the position of a spacer 43.

In this case, in the measurement values 92 shown in FIG. 8B, the amount of the reduction in signal intensity at the spacer position is greater than the reference value 91.

Because of this, the difference 97 shown in FIG. 8C is significant at the spacer position and exceeds the threshold value 96.

As a result, the spacer position can be detected as the touch input position.

In a conventional method for detecting a touch input position on the touch panel, spacer positions are detected in advance by calibration prior to the touch panel being used and the spacer positions are excluded from being subjects for detection as the touch input position.

Namely, even if a spacer position is depressed while the touch panel is being used, it was not possible for that position to be detected as the touch input position.

In contrast to this, in the method for detecting a touch input position on touch panel of this embodiment, as described above, it is possible for a spacer position to be detected as the touch input position.

As a result, it is possible to improve the accuracy of detecting a touch input position.

Second embodiment

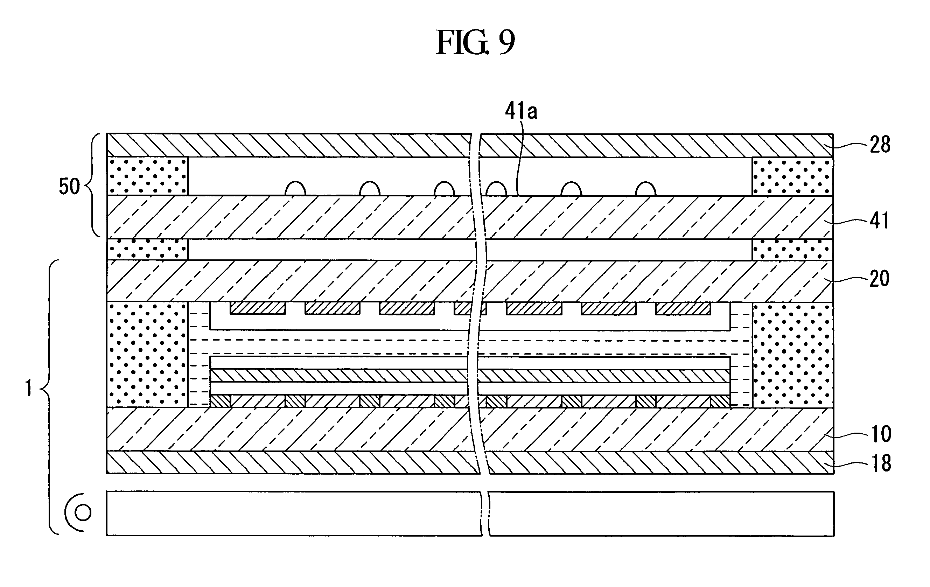

FIG. 9 is an explanatory view of an electro-optic device according to a second embodiment and is a cross-sectional view taken along a line A-A in FIG. 2.

In the electro-optic device according to the second embodiment shown in FIG. 9, the polarization plate 28 on the image display side of the liquid crystal device 1 is arranged instead of the cover film of the first embodiment.

A detailed description of portions having the same structure as in the first embodiment is omitted.

In the second embodiment, a touch panel substrate 41 of a touch panel 50 is installed on an outer side of the top substrate 20 of the liquid crystal device 1.

The polarization plate 28 of the liquid crystal device 1 is arranged so as to face the touch input surface 41 a of this touch panel substrate 41.

In this polarization plate 28, a polarization film obtained by doping polyvinyl alcohol (PVA) or the like with iodine is mounted on a base substrate made from cellulose triacetate (TAC) or the like.

Accordingly, the modulus of elasticity of the polarization plate 28 is equal to the modulus of elasticity of the cover film of the first embodiment.

In this manner, it is possible to achieve the same effects as those of the first embodiment even if the polarization plate 28 is used instead of the cover film of the first embodiment.

Moreover, because the cover film is reduced in the second embodiment, the thickness of the electro-optic device can be reduced.

In contrast to this, in the first embodiment, the material of the cover film can be appropriately selected without being constrained by its function as a polarization plate.

Third embodiment

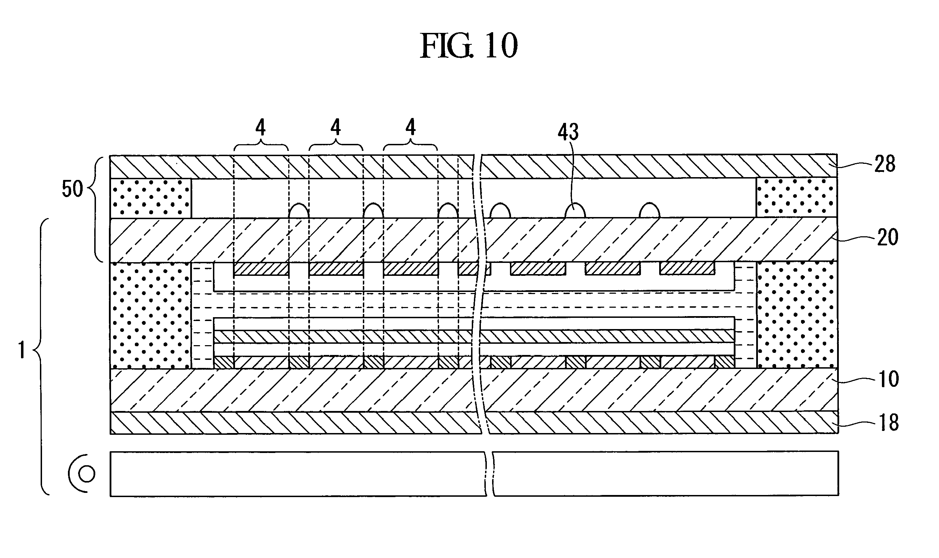

FIG. 10 is an explanatory view of an electro-optic device according to a third embodiment and is a cross-sectional view taken along a line A-A in FIG. 2. In the electro-optic device according to the third embodiment shown in FIG. 10, the top substrate 20 of the liquid crystal device functions as a touch panel substrate.

A detailed description of portions having the same structure as in the first embodiment and second embodiment is omitted.

In the third embodiment, a transmitter, reflective array, and receiver of surface acoustic waves (none of which are shown) are arranged on a surface of the top substrate 20 of the liquid crystal device 1.

Spacers 43 are also arranged on the surface of the top substrate 20.

Moreover, in the same way as in the second embodiment, the polarization plate 28 is arranged so as to face the top portion substrate 20.

In this manner, in this embodiment, because the top portion substrate 20 of the liquid crystal device 1 is configured to function as a touch panel substrate, the thickness of the electro-optic device can be reduced.

The aforementioned spacers 43 are arranged at boundary regions between the plurality of pixels 4 on the liquid crystal device 1.

In the first embodiment, in order to arrange the spacers in predetermined positions, it is necessary to form the spacers while positioning them on the touch panel substrate, and then install the touch panel while positioning it on the liquid crystal device.

In contrast to this, in the third embodiment, it is sufficient if the spacers are formed while being positioned on the liquid crystal device 1.

Accordingly, it is possible to accurately position the spacers in predetermined areas, and it is possible to suppress any reduction in the numerical aperture of the liquid crystal device that is caused by the spacers.

Electronic device

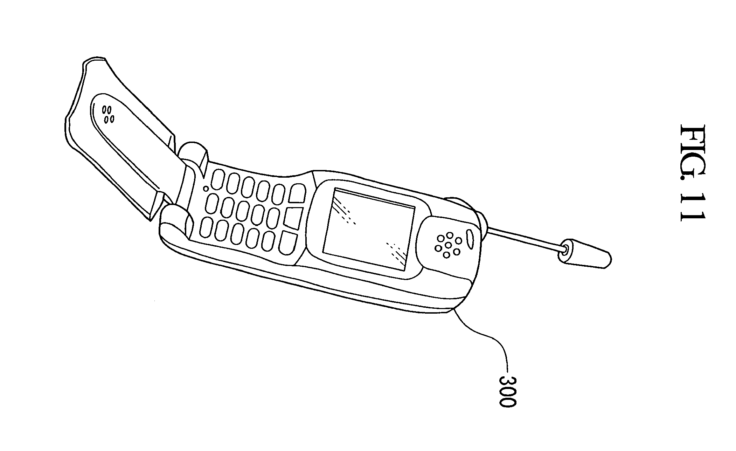

Next, an example of an electronic device that is provided with the electro-optic device of the embodiments will be described using FIG. 11.

FIG. 11 is a perspective view of a mobile telephone.

The above described electro-optic device constitutes a liquid crystal display portion of a mobile telephone 300.

The above described electro-optic device can be applied to a variety of devices in addition to a mobile telephone.

For example, the above described electro-optic device can be applied to electronic devices such as liquid crystal projectors, personal computers (PC) and engineering work stations (EWS) for multimedia applications, pagers, word processors, televisions, viewfinder type or monitor direct view type video tape recorders, electronic notebooks, electronic desktop calculators, car navigation systems, POS terminals, and devices including touch panels.

In each case, because the above described electro-optic devices include a touch panel in which it is possible to prevent erroneous detection of a touch input position, an electronic device having a high degree of reliability can be provided.

The technical scope of this invention is not limited to the above described embodiments and various modifications can be applied to the above described embodiments insofar as they do not depart from the spirit or scope of this invention.

Namely, specific materials and structures described in the embodiments are no more than an example thereof and various modifications may be applied thereto.

For example, in the above described embodiments, a passive matrix type of liquid crystal device is described as an example, however, this invention can also be applied to active matrix type liquid crystal devices that use thin film transistors (TFT) or thin film diodes (TFD) as switching elements.

In addition, in the above described embodiments, a transmission type of liquid crystal device is described as an example, however, this invention can also be applied to reflective types or semi-transmission reflective types of liquid crystal device.

Moreover, in the above described embodiments, a liquid crystal device is employed as an image display device, however, in addition to apparatuses that have an electro-optic effect of changing a transmissivity of light as a result of an index of refraction of a substance changing due to an electric field as in a liquid crystal device, it is also possible to use an apparatus that converts electrical energy into optical energy.

Namely, this invention can be widely applied not only to liquid crystal devices, but also to light emitting devices such as organic electroluminescence (EL) devices, an inorganic EL devices, plasma display devices, electrophoretic display devices, and display devices that use electron discharge elements (such as field emission display and surface conduction electron emitter display devices).

While preferred embodiments of the invention have been described and illustrated above, these are exemplary of the invention and are not to be considered as limiting. Additions, omissions, substitutions, and other modifications can be made without departing from the spirit or scope of this invention. Accordingly, the invention is not to be considered as limited by the foregoing description and is only limited by the scope of the appended claims.

## Claims

1. A touch panel comprising:
a touch panel substrate (41) having an input surface (41a);
a cover film (42) arranged separately from the input surface (41a), and facing to the input surface (41a);
spacers (43) extending upright from the touch panel substrate (41) toward the cover film (42);
a transmitter (51, 54) causing surface acoustic waves (Wvx, Wvy) to be propagated on the input surface (41a);
a receiver (52, 53) measuring the surface acoustic waves (Wvx, Wvy) propagated on the input surface (41a);
a memory (63) storing, as reference values, measurement values of the surface acoustic waves (Wvx, Wvy) when the cover film (42) is not being pressed; and
a determination section (64) detecting, as touch input positions, positions at which a difference between the measurement values of the surface acoustic waves (Wvx, Wvy) when the touch panel (50) is being used and the reference values is significant.

2. A method for detecting a touch input position on a touch panel (50), comprising:
recording, as reference values, measurement values of surface acoustic waves (Wvx, Wvy) when a cover film (42) arranged separately from an input surface (41a) of a touch panel substrate (41) and facing the input surface (41a) is not being pressed; and
detecting, as touch input positions, positions at which a difference between the measurement values of the surface acoustic waves (Wvx, Wvy) when the touch panel (50) is being used and the reference values is significant.

3. An electro-optic device comprising:
an image display device (1) on which a plurality of pixels (4) are arrayed in rows; and
a touch panel (50) arranged on an image display side of the image display device (1), wherein
the touch panel (50) includes:
a touch panel substrate (41) having an input surface (41a);
a cover film (42) arranged separately from the input surface (41a), and facing to the input surface (41a);
spacers (43) extending upright from the touch panel substrate (41) toward the cover film (42);
a transmitter (51, 54) causing surface acoustic waves (Wvx, Wvy) to be propagated on the input surface (41a);
a receiver (52, 53) measuring the surface acoustic waves (Wvx, Wvy) propagated on the input surface (41a);
a memory (63) storing, as reference values, measurement values of the surface acoustic waves (Wvx, Wvy) when the cover film (42) is not being pressed; and
a determination section (64) detecting, as touch input positions, positions at which a difference between the measurement values of the surface acoustic waves (Wvx, Wvy) when the touch panel (50) is being used and the reference values is significant.

4. The electro-optic device according to claim 3, wherein
the image display device (1) functions as the touch panel substrate (41).

5. The electro-optic device according to one of claim 3 and claim 4, wherein
the image display device (1) is a liquid crystal device including a pair of substrates (10, 20) sandwiching a liquid crystal (35) and a pair of polarization plates (18, 28) arranged on an outer side of the pair of substrates (10, 20), and the polarization plate, of the pair of polarization plates (18, 28), located on the image display side functions as the cover film (42).

6. The electro-optic device according to any one of claim 3 to claim 5, wherein
the spacers (43) are arranged at boundary regions of the plurality of pixels (4) on the image display device (1) in view from a perpendicular direction relative to the touch panel substrate (41).

7. An electronic device comprising:
the electro-optic device (100) according to any one of claim 3 to claim 6.
